# EUROPEAN PATENT APPLICATION

(11) **EP 1 602 523 A2**
(43) Date of publication of application: **07.12.2005**
(21) Application number: 05380098.3
(22) Date of filing: 18.05.2005
(51) Int. Cl.: B60N 2/01

(54) **Vehicle with vision for all occupants**

(30) Priority: 21.05.2004 ES 200401344 U
(71) Applicant: Ignacio Ventura, Gonzalez Alonso, 33202 - Gijon, Asturias (ES)
(72) Inventor: Ignacio Ventura, Gonzalez Alonso, 33202 - Gijon, Asturias (ES)

(57) **Abstract**

Vehicle, which can be a car, four wheel drive vehicle, etc.. presents a particular shape due to the raised floor of the rear seats, allowing them to be higher, so permitting perfect frontal vision of the road by the occupants without visual obstruction by the occupants of the front seats or headrests. Also, this raising of the floor is used to give extra luggage space, extending the boot under the rear seats, its access being through the traditional rear hatch door and also through two new lateral hatches, situated under the floor of the rear seats.

## Description

### PURPOSE OF THE INVENTION

This invention, as expressed in the title of this description, refers to an automobile, which allows all of its occupants, including those in the rear seats, total vision of the road and landscape both through the front and the sides of the vehicle. The vehicle also has a longer than usual boot which has been designed and achieved in order to gain numerous and notable advantages over other existing models.

The vehicle is designed in such a way so that the occupants of the rear seats have total vision through the front of the vehicle, without obstructing or disturbing the occupants of the front or their seats, as the rear seats make use of a raised floor with regard to the front seats, the space under the raised rear seats being used as a luggage compartment as the boot extending under the floor of the rear seats, reaching the front seats. In this way, extra luggage space is added to the traditional boot, which can be accessed through the rear hatch door of the car and also through hatches situated either side of the prolongation of the boot , under the rear seats.

### ANTECEDENTS OF THE INVENTION

There are many types of vehicles destined to the transportation of people and their belongings. In all of them, every detail is paid to safety in the case of accident, comfort of the passengers, aspect of the vehicle etc... However, in no existing model do the occupants of the rear seats have good forward vision, as their seats are situated at the same height as those in the front, these obstructing the view of the road. This is a negative aspect of existing vehicles , as not all passengers enjoy total vision during the journey, the rear seat occupants are denied frontal vision. This is an important factor as it could reduce tiredness and boredom on long trips and could also reduce the risk of accidents as more people would observe the road, so participating in the driving and warning about possible dangers.

Likewise, there are many types of car with different shapes of boot with greater or lesser luggage space. In all of them traditional baggage such as suitcases, boxes, bags etc... can be carried but if we wish to transport things which are longer than the boot, such as a pair of skis, then we have to resort to a roof rack or ski rack situated on the roof of the vehicle, with the inconvenience of having to assemble and take down said rack. Alternatively we can fold down one of the seats , so reducing the number of passengers who can travel in the vehicle.

### DESCRIPTION OF THE INVENTION

This vehicle model has a particular shape, due to the raising of the rear seats, giving the occupants greater vision, thus overcoming the frontal visual plane which is determined by the front seats. Said raising of the floor is made use of as luggage space, being an extension of the boot, narrower in height, considerably increasing the luggage space, extending the boot under the rear seats, reaching the back of the front seats. The boot can be accessed both through the rear hatch door of the car and also through two hatches situated either side of the prolongation of the boot , under the rear seats, which, once opened, can also be used as a step to reach the rear seats.

To complement the following description, and with the aim of helping to achieve a better understanding of the characteristics of the invention, a set of drawings has been attached to this descriptive report , which will facilitate the comprehension of the innovations and advantages of the invention.

### BRIEF DESCRIPTION OF THE DRAWINGS

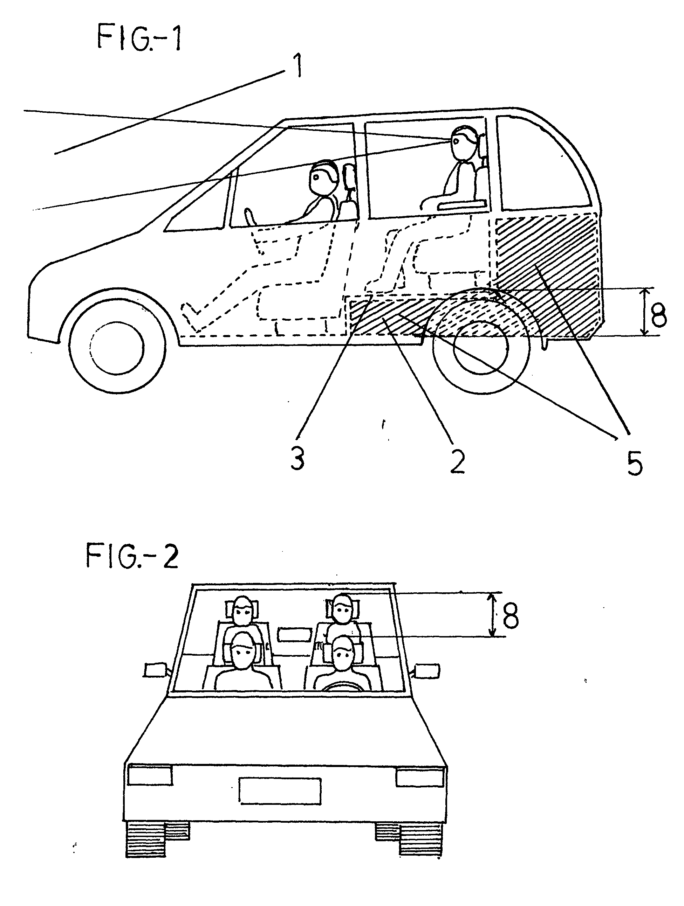

Figure 1. Shows a lateral and interior view of the vehicle model, object of the invention, demonstrating the frontal field of vision of the occupants of the rear seats.
Figure 2. Shows a frontal view of the vehicle and its passengers.

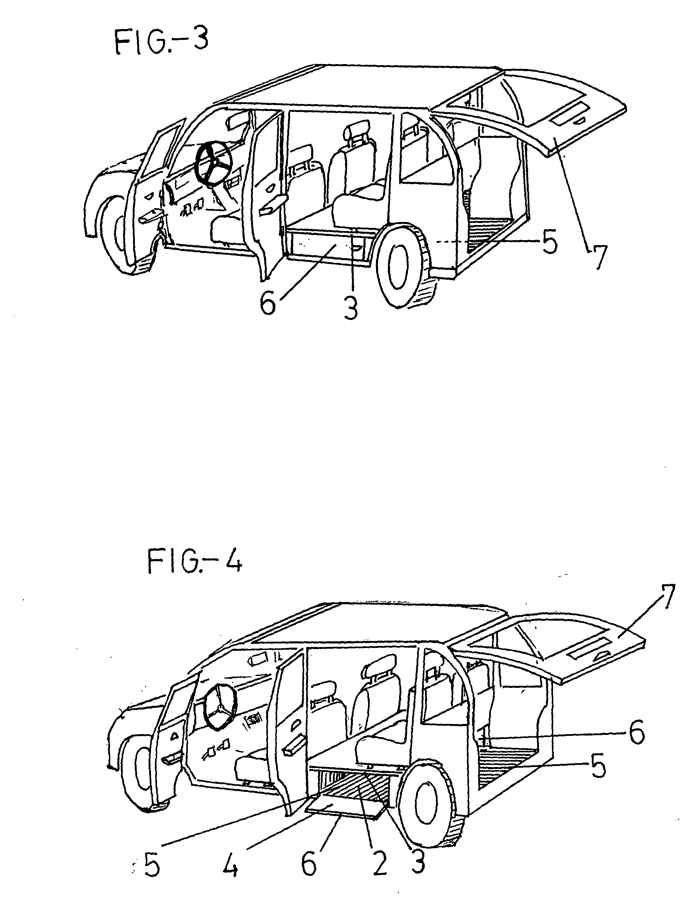

Figure 3. Shows a perspective view of the side/rear part of the vehicle with the doors open and the side hatches of the boot closed.
Figure 4. Shows a perspective view of the side/rear part of the vehicle with the doors open and the side hatches of the boot open.

### DESCRIPTION OF A PREFERRED REALIZATION OF A SHAPE

Viewing the afore-mentioned drawings, it can be observed that the model constitutes a raising of the floor (3) of the rear seats, leaving a space (2), which is used as an extension of the boot (5), greatly increasing the luggage area which can be accessed both through the rear hatch door of the car or two hatches situated at the sides of the vehicle.

Said raising of the floor (3) of the rear seats with regard to the front seats is necessary so that the occupants of the rear seats will have an increased field of vision (1), over (8) the front seats. Also, the lateral hatches (6), once opened, can be used as a step (4) to access the rear seats of the vehicle.

## Claims

1. **VEHICLE WITH FRONTAL VISION FOR ALL OCCUPANTS, WITH AN EXTRA LONG BOOT**, which being a car, four wheel drive vehicle, people-carrier etc.. is **characterised by** the raised floor (3) of the rear seats, so creating extra space(2) in the boot (5), forming part of the same, accessible through two side hatches(6) and also through the rear hatch door (7).
**Characterised by** said elevation (3) with regard to the rest of the vehicle, it is essential to give superior visual height (8) to the occupants of the rear seats and so allowing a total frontal field of vision of (1). Also, the hatches (6), once opened, can be used as a step (4) to facilitate access to the rear seats of the vehicle model, object of the invention.
